Europäisches Patentamt

European Patent Office

Office européen des brevets

(11) Veröffentlichungsnummer: **0 362 379**
**A1**

(12) **EUROPÄISCHE PATENTANMELDUNG**
veröffentlicht nach Art. 158 Abs. 3
EPÜ

(21) Anmeldenummer: 88903990.5

(22) Anmeldetag: **15.01.88**

(96) Internationale Anmeldenummer:
**PCT/SU88/00014**

(87) Internationale Veröffentlichungsnummer:
**WO 89/06847 (27.07.89 89/16)**

(51) Int. Cl.5: **G08C 19/38 , H02K 29/06**

(43) Veröffentlichungstag der Anmeldung:
**11.04.90 Patentblatt 90/15**

(84) Benannte Vertragsstaaten:
**BE DE FR GB IT**

(71) Anmelder: **BELORUSSKY GOSUDARSTVENNY UNIVERSITET IMENI V.I.LENINA**
**Leninsky pr., 4**
**Minsk, 220080(SU)**

(72) Erfinder: **DIMITROV, Dimitr Tsonev**
**ul. Avgusta Troyana, 30**
**Stara Zagora(BG)**
Erfinder: **MATJUKHINA, Ljudmila Ivanovna**
**ul. Kuznechnaya, 3-92**
**Minsk, 220039(SU)**
Erfinder: **MIKHALEV, Alexandr Sergeevich**
**ul. Kuznechnaya, 3-92**
**Minsk, 220039(SU)**
Erfinder: **CHUSHENKOV, Igor Mikhailovich**
**pr. Partizansky, 74-25**
**Minsk, 220021(SU)**

(74) Vertreter: **Lehn, Werner, Dipl.-Ing. et al**
**Hoffmann, Eitle & Partner Patentanwälte**
**Arabellastrasse 4**
**D-8000 München 81(DE)**

(54) **ANORDNUNG ZUR FERNÜBERTRAGUNG VON ROTATIONSWINKEL UND DREHMOMENT ZWISCHEN TREIBENDER UND GETRIEBENER ACHSE.**

(57) Die Einrichtung zur Drehwinkel-und Kraft-Fernübertragung zwischen einer Führungs-und einer Stellwelle, bei welcher die Synchronmaschinen (1,2) über Wellen mit der Führungs- und der Stellwelle (5 bzw.6) und mit Positionsgebern (9,10) kinematisch gekoppelt sind. Der mit der Welle (4) der Synchronmaschine (2) gekoppelte Geber (10) ist an den Eingang einer Einheit (11) zur Sollwertvorgabe der Amplitude der Ständermagnetfelder der Synchronmaschinen angeschlossen, deren anderer Eingang mit dem Ausgang eines Speicherelementes (12) verbunden ist. Der Informationseingang (13) des Speicherelementes (12) ist an den Ausgang des Positionsgebers (9) gelegt. Der Ausgang der Einheit (11) ist an den Steuereingang (14) einer Einheit (15) zur Erzeugung eines Stromes in den Wicklungen der Syn-

chronmaschinen angeschlossen, deren Sollwertvorgabeeingang (16) mit mindestens einem der Geber (9,10) elektrisch verbunden ist. An den Steuereingang (18) des Speicherelementes (12) ist eine Steuereinheit (17) angeschlossen, deren Informationseingänge (19,20) an den Informationseingang (13) des Speicherelementes (12) und an dessen Ausgang geführt sind, wobei der Informationseingang (21) an den Geber (10) angeschlossen ist und an den Steuereingang (22) der Steuereinheit (17) ein äußeres Signal angelegt wird.

EINRICHTUNG ZUR DREHWINKEL- UND KRAFT-FERN-
ÜBERTRAGUNG ZWISCHEN EINER FÜHRUNGS- UND
EINER STELLWELLE

## Gebiet der Technik

Die vorliegende Erfindung betrifft elektrische Maschinen, insbesondere eine Einrichtung zur Drehwinkel-
und Kraft-Fernübertragung zwischen einer Führungs- und
einer Stellwelle.

## Stand der Technik

Die gegenwärtig bekannten Master-Slave-Manipulatoren
werden im wesentlichen unter extremalen Bedingungen eingesetzt, die für den Bediener (Operateur) lebensgefährlich sind. Im Zusammenhang damit werden an die Einrichtungen zur Drehwinkel- und Kraft-Fernübertragung zwischen der Führungs- und der Stellwelle, die mit den zugehörigen Gliedern des Master-Slave-Manipulators kinematisch
verbunden sind und deren adäquate Lage im Raum sicherstellen, solche Forderungen wie hohe Zuverlässigkeit, lange
Lebensdauer, Übereinstimmung mit den Parametern des Operateurs, der über wesentliche adaptive Möglichkeiten verfügt, gestellt. Insbesondere ist ein statischer Fehler
der Winkelübertragung und eine relativ nicht besonders
hohe Genauigkeit bei der Kraftübertragung auf die Führungswelle zulässig.

Üblich ist der Operateur neben der Steuerung des Mas-
ter-Slave-Manipulators gezwungen, auch andere Aufgaben
zu lösen, und braucht dabei eine Erholung. In einigen
Fällen erfordert der Charakter der auszuführenden Operationen ein längeres Halten des Stellorgans (Wirkorgans)
des Master-Slave-Manipulators in einer festen Stellung.
Um die Effektivität der richtigen Arbeit des Systems Operateur-Manipulator zu erhöhen, die Klasse von durch dieses System zu lösenden Aufgaben zu erweitern, muß die
Möglichkeit einer Fixierung der Lage des Führungs- und
des Stellorgans des Master-Slave-Manipulators und folglich der Führungs- und der Stellwelle der Einrichtungen
zur Drehwinkel- und Kraft-Fernübertragung für eine vorbestimmte Zeit gewährleistet werden. Außerdem muß die Betätigung des Master-Slave-Manipulators zum Vermeiden von Notsituationen in den meisten Fällen stufenlos, ruckfrei erfolgen, d.h. dann, wenn die vom Operateur zu entwickelnde Kraft einer Kraft gleich wird, die zum Überwiwden des Belastungsmomentes erforderlich ist, das auf die Führungswelle übertragen wird.In einigen Fällen muß man jedoch nach der Fixierung die Bewegung in umgekehrter Richtung beginnen, wobei auch eine ruckweise Betätigung zulässig ist.

So ist eine Einrichtung zur Drehwinkel- und Kraft-Fernübertragung zwischen einer Führungs-und einer Stellwelle bekannt, welche mit der Führungs-und der Stellwelle kinematisch verbundene Gleichstrom-Kommutatormotoren, deren Wicklungen mit den Ausgängen von Verstärkern zur Verstärkung von Signalen verbunden sind, mit denen der Führungs- und der Stell-Kommutatormotor gesteuert werden, Positionsgeber für die Wellen der Kommutatormotoren, die mit den Eingängen einer Einheit zur Sollwertvorgabe der Amplitude des Ankermagnetfeldes des Stell-Kommutatormotors in Verbindung stehen, und Belastungsmomentgeber enthält, die mit den Wellen der Führungs- und der Stell-Kommutatormotors verbunden und ausgangsseitig an die Eingänge der Einheit zur Sollwertvorgabe der Amplitude des Ankermagnetfeldes des Führungs-Kommutatormotors angeschlossen sind. Der Ausgang der letzteren ist über ein nichtlineares Korrekturglied, das für die Gewährleistung der Fixierung der Lage der Führungs-und Stellwelle und für die Übertragung von bloß entgegenwirkenden Kräften auf die Führungswelle bestimmt ist, an den Eingang eines Steuersignalverstärkers für die Steuerung des Führungs-Kommutatormotors angeschlossen (I.M. Egorov u.a. " Projektierung von bilateral wirkenden Nachführungssystemen", Moskau, Verlag "Mashinistroenie", 1980, S.71 bis 74).

In der beschriebenen Einrichtung sorgen die Einheit zur Sollwertvorgabe des Ankermagnetfeldes des Stell-Kommutatormotors, die Positionsgeber und der Stellmotor mit dem Steuersignalverstärker zu dessen Steuerung für eine Fernübertragung des Winkels sorgen , während die Einheit zur Sollwertvorgabe der Amplitude des Ankermagnetfeldes des Führungs-Kommutatormotors, die Belastungsmomentgeber, das nichtlineare Korrekturglied und der Führungs-Kommutatormotor mit dem Signalverstärker für dessen Steuerung eine Übermittlung von entgegenwirkenden Kräften an die Führungswelle sicherstellen. Solch eine Struktur der Einrichtung mit zwei unabhängigen Kanälen zur Fernübertragung von Drehwinkel und Kraft, was durch die Besonderheiten der Bauarten der Gleichstrom-Kommutatormotoren besingt ist, gewährleistet die Fixierung der Lage der Führungs-und der Stellwelle für den Fall, daß das vom Operateur zu entwickelnde Moment geringer als das auf die Führungswelle zu übertragende Belastungsmoment ist. Fallen die Richtungen der genannten Momente zusammen, so werden keine Kräfte auf die Führungswelle übertragen. Infolgedessen empfindet der Operateur nicht immer die Kraft bei vorzeichenvariabler Belastung, was zu Fehlern bei der Arbeit führt. Die Anwendung von Kommutatormotoren setzt die Zuverlässigkeit und die Langlebigkeit der beschriebenen Einrichtung dadurch herab, daß die Kommutatormotoren eine Kommutator-und Bürsteneinheit enthalten, die schnell, besonders unter extremalen Bedingungen, ausfällt. Darüber hinaus wird die Zuverlässigkeit ebenfalls dadurch herabgesetzt, daß zwei unabhängige Kanäle zur Fernübertragung von Drehwinkel bzw. Kraft, in denen eine Verdopplung der Funktionseinheiten geschieht, sowie zwei Momentgeber vorhanden sind.

Ferner ist eine Einrichtung zur Drehwinkel-und Kraft-Fernübertragung zwischen einer Führungs-und einer Stellwelle bekannt, welche eine Führungs- und eine Stellsynchronmaschine enthält, deren Wellen mit der Führungs-bzw. der Stellwelle und mit Positionsgebern kinematisch verbunden sind. Der Ausgang eines der Positionsgeber ist an den Sollwertvorgabeeingang einer Einheit zur Erzeugung eines Stromes in den Wicklungen der Führungs- und der Stellsynchronmaschine geschaltet, deren Steuereingang elektrisch mit dem Ausgang einer Einheit zur Sollwertvorgabe der Ständermagnetfelder der Führungs-und der Stellsynchronmaschine verbunden ist, die auf einem Vergleichselement aufgebaut ist und die eingangsseitig mit den Ausgängen der Positionsgeber in Verbindung steht, wobei die Ausgänge der Einheit zur Erzeugung eines Stromes in den Wicklungen der Führungs- und der Stellsynchronmaschine an die miteinander elektrisch gekoppelten entsprechenden Wicklungen der Führungs- und der Stellsynchronmaschine (SU,A, 1176425) angeschlossen sind.

Die erwähnte Einrichtung zeichnet sich durch eine höhere Zuverlässigkeit und eine längere Lebensdauer unter extremalen Bedingungen gegenüber der obenbeschriebenen dank der Verwendung von Synchronmaschinen aus, die keine Kommutator-und Bürsteneinheit enthalten und dadurch zuverlässiger unter den extremalen Arbeitsbedingungen sind. Die Struktur der Einrichtung ist eine solche, daß ein gemeinsamer Kanal zur Übertragung von Drehwinkel und Kraft und keine Momentgeber vorhanden sind. Jedoch ermöglicht die Einrichtung keine Fixierung der Lage der Wellen, was die Funktionsmöglichkeiten der Einrichtung einengt und außerdem zur Vergrößerung der Ermüdung des Operateurs führt.

Es ist auch eine Einrichtung zur Drehwinkel- und Kraft-Fernübertragung zwischen einer Führungs- und einer Stellwelle bekannt, die eine Führungs- und eine Stellsynchronmaschine enthält, deren Wellen jeweils mit der Führungs- und der Stellwelle und mit Positionsgebern kinematisch verbunden sind. Einer der letzteren, welcher mit der Welle der Stellsynchronmaschine verbunden ist, ist mit seinem Ausgang an den ersten Eingang einer Einheit zur Sollwertvorgabe der Amplitude der Ständermagnetfelder der Führungs- und der Stellsynchronmaschine angeschlossen, deren zweiter Eingang mit dem mit der Welle der Führungssynchronmaschine gekoppelten Positionsgeber elektrisch verbunden ist und deren Ausgang am Steuereingang der Einheit zur Erzeugung eines Stromes in den Wicklungen der Führungs- und der Stellsynchronmaschine liegt, deren Sollwertvorgabeeingang mit dem Ausgang mindestens eines der Positionsgeber in elektrischer Verbindung steht und deren Ausgänge an die miteinander elektrisch verbundenen entsprechenden Wicklungen der Führungs- und der Stellsynchronmaschine (SU,A, 1257690) angeschlossen sind.

Bei der eben beschriebenen Einrichtung ist die Einheit zur Sollwertvorgabe auf einem Vergleichselement aufgebaut, an dessen Eingänge die Ausgänge der Positionsgeber angeschlossen sind, während die Erzeugung eines Stromes in den Wicklungen der Führungs-und der Stellsynchronmaschine entsprechend dem Absolutwert eines Signals erfolgt, das am Steuereingang der zur Erzeugung eines Stromes dienenden Einheit eintrifft, weil die Einheit zur Vorgabe der Orientierung der Ständermagnetfelder der Führungs- und der Stellsynchronmaschine auf einem Summator aufgebaut ist, der ausgangsseitig mit dem Eingang einer Divisionseinheit zur Teilung durch zwei verbunden ist.

Die genannte Einrichtung gewährleistet eine genauere Fernübertragung der Kraft zwischen der Führungs- und der Stellwelle, wobei die Fixierung der Lage der Wellen nur bei kleinen Belastungsmomenten wegen innerer, in den kinematischen Verbindungen auftretender Widerstandsmomente möglich ist. Jedoch begrenzt die Unmöglichkeit der Fixierung der Lage der Führungs- und der Stellwelle bei mittleren und hohen Werten des Belastungsmomentes das Anwendungsgebiet und die Funktionsmöglichkeiten der auf der Basis solcher Einrichtungen aufgebauten Master-Slave-Manipulatoren.

Darüber hinaus führt die Arbeit des Operateurs an einem Manipulator mit der zuletzt geschilderten Ein-

richtung, während der die Last in einer festen Stellung oft gehalten werden muß, zu einer schnellen Ermüdung des Operateurs.

Offenbarung der Erfindung

Der Erfindung liegt die Aufgabe zugrunde, eine Einrichtung zur Drehwinkel- und Kraft-Fernübertragung zwischen einer Führungs- und einer Stellwelle mit einer solchen Orientierung der Magnetfelder von Läufern und Ständern einerFührungs- und einer Stellsynchronmaschine zu schaffen, die die Fixierung der Lage der Führungs- und der Stellwelle in dem gesamten Änderungsbereich des Belastungsmomentes und neben einem stufenweisen Übergang einen stufenlosen Übergang von dem Fixierungsbetrieb zum Betrieb der Drehwinkel- und Kraft-Fernübertragung bei Vorhandensein einer elektrischen Kopplung zwischen den Wicklungen der Führungs- und der Stellsynchronmaschine ermöglicht.

Die gestellte Aufgabe wird dadurch gelöst, daß die Einrichtung zur Drehwinkel- und Kraft-Fernübertragung zwischen einer Führungs- und einer Stellwelle, welche eine Führungs- und eine Stellsynchronmaschine enthält, deren Wellen jeweils mit der Führungs- und der Stellwelle und mit Positionsgebern kinematisch gekoppelt sind, von denen der eine, mit der Welle der Stellsynchronmaschine verbundene Positionsgeber ausgangsseitig an den ersten Eingang einer Einheit zur Sollwertvorgabe der Amplitude der Ständermagnetfelder der Führungs- und der Stellsynchronmaschine angeschlossen ist, deren zweiter Eingang mit dem mit der Welle der Führungssynchronmaschine gekoppelten Positionsgeber elektrisch verbunden ist und deren Ausgang am Steuereingang einer Einheit zur Erzeugung eines Stromes in den Wicklungen der Führungs- und der Stellsynchronmaschine liegt, deren Sollwertvorgabeeingang mit dem Ausgang mindestens eines der Positionsgeber elektrisch gekoppelt ist und deren Ausgänge an die miteinander elektrisch gekoppelten entsprechenden Wicklungen der Führungsund der Stellsynchronmaschine angeschlossen sind, gemäß der Erfindung ein Speicherelement, dessen Informationseingang am Ausgang des Positionsgebers liegt, der mit
der Welle der Führungssynchronmaschine verbunden ist,
und dessen Ausgang an den zweiten Eingang der Einheit
zur Sollwertvorgabe der Amplitude der Ständermagnetfelder
der Führungs- und der Stellsynchronmaschine angeschlossen
ist, und eine Steuereinheit für das Speicherelement enthält, deren Ausgang an den Steuereingang des Speicherelementes, deren erster und zweiter Informationseingang
an den Informationseingang des Speicherelementes bzw. an
den Ausgang des letzteren angeschlossen sind, wobei der
dritte Informationseingang der Steuereinheit mit dem Ausgang des mit der Welle der Stellsynchronmaschine gekoppelten Positionsgebers verbunden ist und an den Steuereingang der Steuereinheit äußere Signale angelegt werden, mit
welchen äußeren Signalen die Steuereinheit ein Steuersignal, durch das die Speicherung eines Drehwinkels der Welle der Führungssynchronmaschine im Augenblick der Fixierung
bewirkt wird, und ein anderes Steuersignal bei Gleichheit
des laufenden Drehwinkelwertes der Welle der Führungssynchronmaschine und eines im Speicherelement gespeicherten
Wertes oder eines laufenden Drehwinkelwertes der Welle der
Stellsynchronmaschine liefert, wobei mit diesem anderen
Steuersignal die Übertragung des laufenden Drehwinkelwertes der Welle der Führungssynchronmaschine vom Speicherelement erfolgt.

Es ist zweckmäßig, daß die Einrichtung zur Drehwin-
kel- und Kraft-Fernübertragung eine Einheit zur Vorgabe
der Orientierung der Ständermagnetfelder der Führungs-
und der Stellsynchronmaschine aufweist, deren Ausgänge
an den Ausgang des mit der Welle der Stellsynchronmaschine gekoppelten Positionsgebers und an den Ausgang des
Speicherelementes angeschlossen sind und deren Ausgang
mit dem Sollwertvorgabeeingang der Einheit zur Erzeugung
eines Stromes in den Wicklungen der Führungs- und der
Stellsynchronmaschine in Verbindung steht.

Es ist auch zweckmäßig, daß in der erfindungsgemäßen Einrichtung die Steuereinheit des Speicherelementes ein erstes und ein zweites Vergleichsglied, deren eine Eingänge vereingt sind, ein logisches NAND-Glied, dessen einer Eingang an den Ausgang des ersten Vergleichsgliedes und dessen anderer Eingang an den Ausgang des zweiten Vergleichsgliedes geschaltet ist, ein Flipflop, dessen Setzeingang an den Ausgang des logischen NAND-Gliedes angeschlossen ist, und einen Schalter enthält, dessen einer Anschluß an den Rücksetz- und den Takteingang des Flipflops geschaltet ist und an dessen anderen Anschluß ein Signal für die Ansteuerung des Flipflops angelegt wird, wobei die zusammengeschalteten Eingänge des ersten und des zweiten Vergleichsgliedes als erster Informationseingang der Steuereinheit des Speicherelementes, die anderen Eingänge des ersten und des zweiten Vergleichsgliedes als erster bzw. zweiter Informationseingang dienen, während der Steuereingang des Schalters als Steuereingang und der Ausgang des Flipflops als Ausgang der Steuereinheit des Speicherelementes dient.

Die Einrichtung zur Drehwinkel- und Kraft-Fernübertragung zwischen einer Führungs- und einer Stellwelle gewährleistet die Fixierung der Führungs- und der Stellwelle für eine vorgegebene Zeit in dem gesamten Änderungsbereich des Belastungsmomentes durch Unveränderlichkeit der Orientierung der Ständermagnetfelder der Führungs- und der Stellsynchronmaschine sowie neben einer stufenweisen Betätigung noch eine stufenlose Betätigung des Master-Slave-Manipulators nach der Fixierung. Dadurch wird der Einsatzbereich des Master-Slave-Manipulators erweitert, die Ermüdung des Operateurs durch Schaffung von komfortableren Bedingungen für dessen Arbeit, d.h. durch Gewährleistung der Möglichkeit einer Erholung während der Fixierung, gesenkt. Als Folge davon wird die Qualität der Operationen verbessert, die von einem biotechnischen System Operateur-Manipulator ausgeführt werden.

Kurzbeschreibung der Zeichnungen

Im weiteren wird die Erfindung an Hand ihrer konkreten Ausführungsformen unter Bezugnahme auf die beigelegten Zeichnungen näher erläutert. Es zeigt:

Fig.1 ein Funktionsschaltbild einer erfindungsgemäßen Einrichtung zur Drehwinkel- und Kraft-Fernübertragung zwischen einer Führungs- und einer Stellwelle;

Fig.2 dito wie in Fig.1 mit einer Einheit zur Vorgabe der Orientierung der Ständermagnetfelder der Führungs- und der Stellsynchronmaschine und mit einer elektrischen Verbindung der Einheit zur Erzeugung eines Stromes in den Wicklungen der Führungs- und der Stellsynchronmaschine mit den Ausgängen beider Positionsgeber gemäß der Erfindung;

Fig.3 dito wie in Fig.2, mit Funktionsschemen der Einheit zur Sollwertvorgabe der Amplitude und der Einheit zur Vorgabe der Orientierung der Ständermagnetfelder der Führungs- und der Stellsynchronmaschine und der Einheit zur Erzeugung eines Stromes in den Wicklungen der Führungs- und der Stellsynchronmaschine;

Fig.4 (a,b,c,d,e, f) Zeigerdiagramme der Magnetfelder der Ständer und Läufer der Synchronmaschinen bei gleichsinniger Schaltung deren Wicklungen für die in Fig.1 gezeigte Ausführungsform;

Fig.5 (a,b,c,d) Zeigerdiagramme der Magnetfelder der Ständer und Läufer der Synchronmaschinen bei gegensinniger Schaltung deren Wicklungen für die in Fig.2 dargestellte Ausführungsform der Einrichtung.

Bevorzugte Ausführungsform der Erfindung

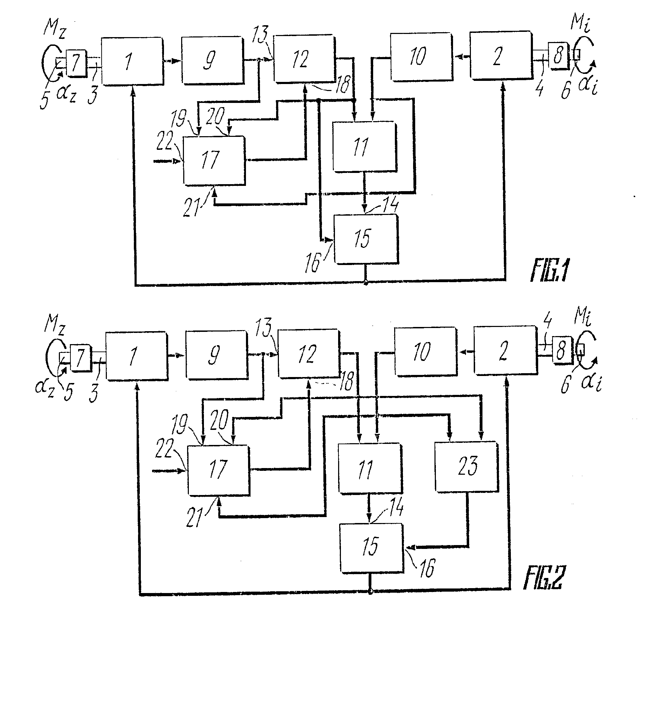

Die Einrichtung zur Drehwinkel- und Kraft-Fernübertragung zwischen einer Führungswelle und einer Stellwelle enthält eine Führungs- und eine Stellsynchronmaschine 1 bzw. 2 (Fig.1), deren Wellen 3 bzw. 4 mit der zugehörigen Führungs- und Stellwelle 5 bzw.6 - in der zu beschreibenden Ausführungsform über Kupplungen 7,8 - kinematisch gekoppelt sind. Zur Verminderung der Drehgeschwindigkeit der Führungs- und der Stellwelle 5 bzw.6 wird die Verbindung derselben mit den Wellen 3,4 der Führungs- und Stellsynchronmaschine 1 bzw.2 über Getriebe ( nicht gezeigt) hergestellt.

Die Synchronmaschinen 1,2 sind mit Positionsgebern 9, 10 für ihre Wellen versehen. Der Ausgang des Positionsgebers 10 ist an den ersten Eingang einer Einheit 11 zur Sollwertvorgabe der Amplitude der Ständermagnetfelder der Führungs- und der Stellsynchronmaschine geschaltet, deren zweiter Eingang am Ausgang eines Speicherelementes 12 liegt. Der Informationseingang 13 des Speicherelementes 12 ist an den Ausgang des Positionsgebers 9 angeschlossen. Der Ausgang der Einheit 11 zur Sollwertvorgabe der Amplitude der Magnetfelder ist an den Steuereingang 14 einer Einheit 15 zur Erzeugung eines Stromes in den Wicklungen der Führungs- und der Stellsynchronmaschine gelegt, deren Sollwertvorgabeeingang 16 mit dem Ausgang mindestens eines der Positionsgeber 9,10 – bei der zu beschreibenden Ausführungsform am Ausgang des Speicherelementes 12 liegtelektrisch verbunden ist.

Die Ausgänge der Einheit 15 zur Erzeugung eines Stromes in den Wicklungen, deren Anzahl der Anzahl der Wicklungen der Synchronmaschinen 1,2 gleich ist, sind an die elektrisch verbundenen entsprechenden Wicklungen der Synchronmaschinen 1,2 gelegt. Da die Anzahl von Wicklungen der Synchronmaschine 1 der Anzahl von Wicklungen der Synchronmaschine 2 gleich ist und die Wicklungszahl bei verschiedenen Synchronmaschinentypen unterschiedlich sein kann, sind in Fig.1 die Wicklungen selbst nicht gezeigt, während die Verbindung der Einheit 15 zur Erzeugung eines Stromes mit den Wicklungen und die elektrische Kopplung zwischen den Wicklungen in Form einer Linie schematisch dargestellt sind.

Die Einrichtung enthält auch eine Steuereinheit 17 für das Speicherelement, deren Ausgang an den Steuereingang 18 des Speicherelementes 12, deren Informationseingänge 19,20 an den Informationseingang 13 des Speicherelementes 12 bzw. an den Ausgang des letzteren angeschlossen sind. Der Informationseingang 21 der Steuereinheit 17 ist mit dem Ausgang des Positionsgebers 10 verbunden. An den Steuereingang 22 der Einheit 17 werden äußere Signale jeweils bei der Fixierung der Wellen 3,4 der Führungs- und der Stellsynchronmaschine 1 bzw.2 und bei der Beendigung der Fixierung angelegt, wobei mit diesen äußeren Signalen die Steuereinheit ein Steuersignal, durch das die Speicherung eines Drehwinkels der Welle 3 der Führungssynchronmaschine 1 im Augenblick der Fixierung bewirkt wird, und ein anderes Steuersignal bei Gleichheit des laufenden Drehwinkelwertes der Welle 3 der Führungssynchronmaschine 1 und eines im Speicherelement 12 gespeicherten Wertes oder eines laufenden Drehwinkelwertes der Welle 4 der Stellsynchronmaschine 2 liefert, mit dem die Übertragung des laufenden Drehwinkelwertes der Welle 3 der Führungssynchronmaschine 1 vom Speicherelement 12 erfolgt.

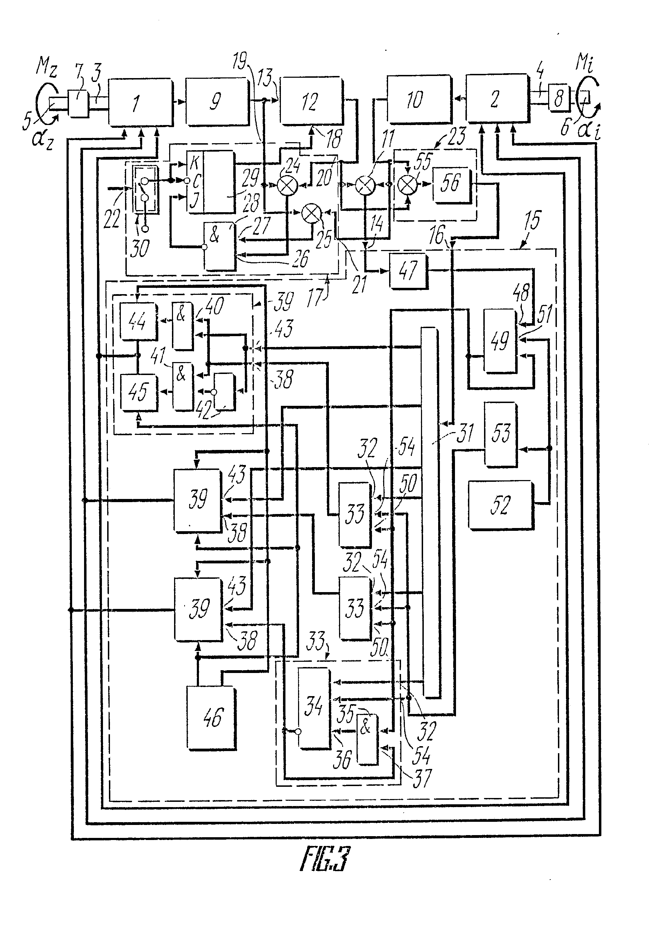

Zur Erhöhung der Genauigkeit der Kraftübertragung auf die Führungswelle 5 sind die Ausgänge des Positionsgebers 10 und des Speicherelementes 12 an die Eingänge einer Einheit 23 (Fig.2) zur Vorgabe der Orientierung der Ständermagnetfelder der Führungs- und Stellsynchronmaschine angeschlossen, deren Ausgang am Sollwertvorgabeeingang 16 der Einheit 15 zur Erzeugung eines Stromes in den Wicklungen liegt.

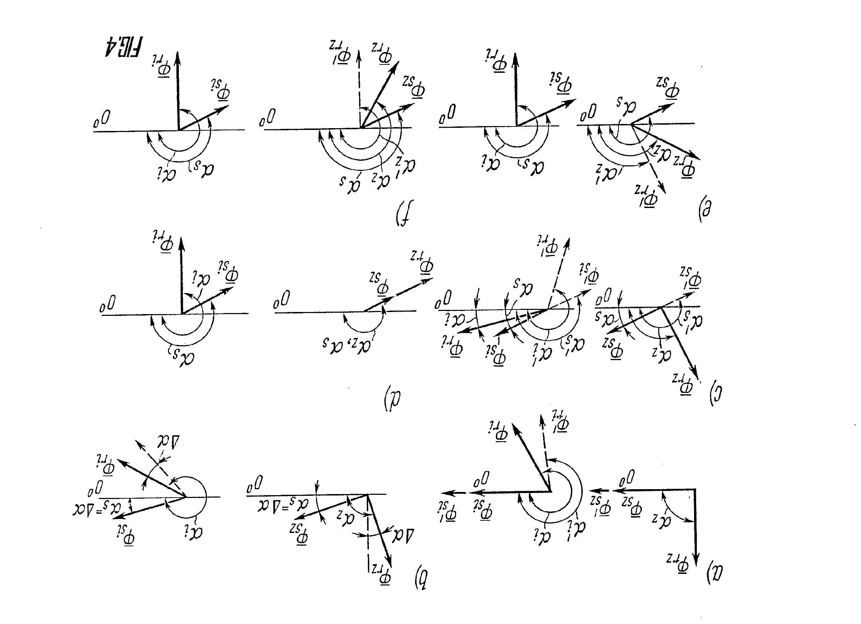

Die Steuereinheit 17 des Speicherelementes enthält Vergleichsglieder 24,25 (Fig.3), deren eine Eingänge vereinigt sind und deren Ausgänge jeweils mit dem Eingang 26 bzw. 27 eines logischen NAND-Gliedes 28 in Verbindung stehen, dessen Ausgang an den J-Setzeingang eines Flipflops 29 geschaltet ist. An den K-Rücksetzeingang und an den C-Takteingang des Flipflops 29 ist ein Anschluß eines Schalters 30 gelegt, dessen anderer Anschluß mit einem für die Steuerung des Flipflops 29 bestimmten Steuersignal beaufschlagt wird, das bei der zu betrachtenden Ausführungsform ein logisches 1-Signal darstellt. Dabei dienen die zusammengeschalteten Eingänge der Vergleichsglieder 24,25 als Informationseingänge 19 der Steuereinheit 17 des Speicherelementes. Die anderen Eingänge der Vergleichsglieder 24, 25 sind als Informationseingänge 20 bzw.21 der Steuereinheit benutzt, wobei der Steuereingang des Schalters 30 als Steuereingang 22 und der Ausgang des Flipflops 29 als Ausgang der Steuereinheit 17 des Speicherelementes dient. Das Speicherelement 12 ist nach einer bekannten Schaltung, z.B. in Form eines aus D-Flipflops bestehenden Registers ausgeführt.

Bei der zu beschreibenden Ausführungsform der Einrichtung sind die jeweiligen Wicklungen der Ständer der Synchronmaschinen 1,2 gleichsinnig geschaltet, wobei diese Zuschaltung sowohl seriell als auch parallel sein kann. Außerdem sind, wie in Fig.3 dargestellt ist, in der Einrichtung Drehstrom-Synchronmaschinen 1,2, d.h. solche mit drei Wicklungen benutzt. Dabei ist die in Fig.3 wiedergegebene Struktur der Einheit 15 zur Erzeugung eines Stromes in den Wicklungen dadurch festgelegt, daß an deren Steuer- und Sollwertvorgabeeingang 14 bzw.16 Informationen über die Amplitude und die Orientierung der Ständermagnetfelder der Synchronmaschinen 1,2 als Kodes eintreffen. Als Sollwertvorgabeeingang der Einheit 15 zur Erzeugung eines Stromes in den Wicklungen dient ein Adreßeingang eines Festwertspeichers 31 mit in diesem abgelegten Kodes der Dauern und der Polarität der Stromversorgungsimpulse der Wicklungen der Synchronmaschinen 1,2. Der Ausgabebus des Festwertspeichers 31 ist an die Steuereingänge 32 von Umsetzern 33 zur Umwandlung eines Kodes in Impulsdauer angeschlossen, deren Anzahl der Zahl der Wicklungen jeder Synchronmaschine 1 bzw.2 gleich ist. Jeder Umsetzer 33 enthält in der zu beschreibenden Ausführungsform einen Rückwärtszähler 34, dessen Setzeingang als Steuereingang 32 des Umsetzers 33 dient, und ein 2-Eingangs-UND-Glied 35, dessen Ausgang an den Subtraktionseingang 36 des Rückwärtszählers 34 gelegt ist. Der invertierende Borgenausgang des Rückwärtszählers 34 ist mit dem Eingang 37 des logischen UND-Gliedes 35 verbunden und bildet den Ausgang des Umsetzers 33. Zur Vereinfachung der Struktur der Einheit 15 zur Erzeugung eines Stromes in den Wicklungen ist in Fig.3 das Prinzipschaltbild nur eines Umsetzers 33 gezeigt.

Die Ausgänge sämtlicher Umsetzer 33 sind an die zur Sollwertvorgabe der Impulsdauer vorgesehenen Eingänge 38 der Umschalter 39 angeschlossen, deren Anzahl der Wicklungszahl jeder Synchronmaschine 1 bzw.2 gleich ist. Jeder Umschalter 39 enthält bei der zu betrachtenden Ausführungsform zwei 2-Eingangs-UND-Glieder 40,41, deren erste Eingänge zusammengeschaltet sind und als Eingang 38 des Umschalters 39 dienen. Der zweite Eingang des logischen UND-Gliedes 40 ist an den Eingang eines Negators 42 gelegt, dient als Sollwertvorgabeeingang 43 der Polarität der Impulse des Umschalters 39 und ist an den entsprechenden Ausgang des Festwertspeichers 31 angeschlossen. Der Ausgang des Negators 42 ist an den zweiten Eingang des logischen UND-Gliedes 41 geschaltet. Die Ausgänge der logischen UND-Glieder 40,41 sind an die Steuereingänge der Schalter 44,45 angeschlossen, deren Leistungseingänge mit einer Spannungsquelle 46 verbunden sind, wobei die Ausgänge dieser Schalter vereinigt sind und als Ausgang des Umschalters 39 bzw. als Ausgang der Einheit 15 zur Erzeugung eines Stromes dienen, der — wie es oben angegeben wurde— an entsprechende Wicklungen der Führungs- und der Stellsynchronmaschine 1 bzw. 2 angeschlossen ist.

Als Steuereingang 14 der Einheit 15 zur Erzeugung eines Stromes in den Wicklungen ist der Eingang einer Schaltung 47 zur Ermittlung des Moduls des Steuersignals benutzt, deren Ausgang an den Setzeingang 48 eines Rückwärtszählers 49 angeschlossen ist, dessen Borgenausgang mit dem Schreibeingang dieses Zählers 49 und mit den für die Vorgabe der Impulsfrequenz bestimmten Eingängen des Kode-Impulsdauer-Umsetzers 33 verbunden ist. Als Eingang 50 des letzteren dient der zweite Eingang des logischen UND-Gliedes 35. An den Subtraktionseingang 51 des Rückwärtszählers 49 ist der Ausgang eines Steuergenerators 52 angeschlossen, der auch mit dem Eingang eines Frequenz-teilers 53 verbunden ist. Der Ausgang des Frequenzteilers 53 ist an die Schreibeingänge 54 der Kode-Impulsdauer-Umsetzer 33 angeschlossen. Als Schreibeingang 54 jedes Umsetzers 33 dient ein zugehöriger Eingang des Rückwärts-zählers 34.

Bei der zu beschreibenden Ausführungsform enthält die Einheit 23 zur Vorgabe der Orientierung der Ständermagnetfelder der Führungs- und der Stellsynchronmaschine einen Summator 55, dessen Eingänge als Eingänge der Einheit 23 zur Vorgabe der Orientierung dienen, die an die Eingänge der Einheit 11 zur Sollwertvorgabe der Amplitude der Ständermagnetfelder gelegt sind, die mit einem Vergleichsglied ausgeführt ist. Der Ausgang des Summators 55 ist an den Eingang einer Divisionseinheit 56 zur Teilung durch zwei angeschlossen, deren Ausgang als Ausgang der Einheit 23 zur Vorgabe der Orientierung dient.

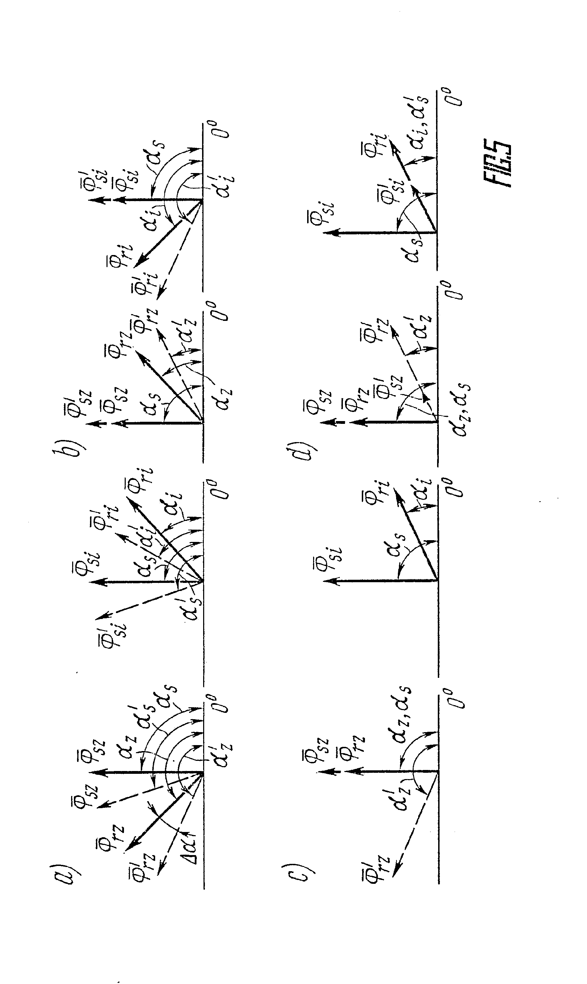

Zum besseren Verständnis der Arbeitsweise der Einrichtung zur Drehwinkel- und Kraft-Fernübertragung zwischen einer Führungs- und einer Stellwelle sind in Fig.4 (a,b, c,d,e,f) und in Fig.5 (a,b,c,d) Zeigerdiagramme der Mag-netfelder $\overline{\Phi}_{rz}$ , $\overline{\Phi}_{ri}$ der Läufer der Führungs- bzw. Stell-synchronmaschine 1 bzw.2 und der Magnetfelder $\overline{\Phi}_{sz}$ , $\overline{\Phi}_{si}$ der Ständer der Führungs- bzw. Stellsynchronmaschine 1 bzw. 2 bei verschiedenen Betriebsarten der erfindungsgemäßen Einrichtung dargestellt.

Die Einrichtung zur Drehwinkel- und Kraft-Fernübertragung zwischen einer Führungs- und einer Stellwelle funktioniert wie folgt. Durch den mit der Welle 3 der Führungssynchronmaschine 1 gekoppelten Positionsgeber 9 (Fig.1) wird die Orientierung der Ständermagnetfelder $\overline{\Phi}_{sz}$ , $\overline{\Phi}_{si}$ der Führungs- und der Stellsynchronmaschine 1 bzw. 2 derart vorgegeben, daß der Winkel zwischen dem Magnetfeld $\overline{\Phi}_{rz}$ , $\overline{\Phi}_{ri}$ des Läufers der Führungs-synchronmaschine 1 und dem Magnetfeld $\overline{\Phi}_{sz}$ , $\overline{\Phi}_{si}$ des Ständers der zugehörigen Synchronmaschine 1 bzw.2 konstant bleibt ( oder sich in einem Bereich ändert, der durch Vorhandensein einer elektromagnetischen Zeitkonstante bei den Synchronmaschinen 1,2 bedingt ist). Bei der zu betrachtenden Ausführungsform der Einrichtung ist der Winkel $(\overline{\Phi}_{rz}, \widehat{\Phi}_{sz})$ konstant. Dies ist z.B. dadurch erreichbar, daß man an den Wicklungen der Ständer der Synchronmaschinen 1,2 Spannungen erzeugt, deren Vektorsumme einen betragsmäßig konstanten Winkel mit $\overline{\Phi}_{rz}$ oder $\overline{\Phi}_{ri}$ beträgt. Insbesondere ist es zur Steigerung des Wirkungsgrades vorteilhaft, diesen Winkel gleich 90° vorzugeben. Für Drehmomente der Führungs- und der Stellsynchronmaschine 1 bzw.2, welche wir mit $M_1$ bzw. $M_2$ bezeichnen, kann man folgende Ausdrücke

$$\begin{cases} M_1 = K_1 \Phi_{rz} \Phi_{sz} \cdot \sin (\overline{\widehat{\Phi}}_{rz}, \overline{\Phi}_{sz}) \ , \\ M_2 = K_2 \Phi_{ri} \Phi_{si} \cdot \sin (\overline{\widehat{\Phi}}_{ri}, \overline{\Phi}_{si}) \end{cases} \qquad (1)$$

schreiben, wobei $K_1, K_2$ Faktoren sind, die durch die Bauarten der Synchronmaschinen 1,2 bestimmt sind, insbesondere durch die Form des Läufers und Ständers, die Größe des Luftspaltes zwischen diesen, durch die Abmessungen der Synchronmaschine. Wird das Ausgangssignal der Einheit 11 zur Sollwertvorgabe der Amplitude der Magnetfelder der Ständer der Führungs- und der Stellsynchronmaschine vergrößert oder verkleinert, so führt dies zur Erhöhung bzw. zur Verminderung der Amplitude der Ständermagnetfelder $\overline{\Phi}_{sz}, \overline{\Phi}_{si}$ .

Zur Erhöhung der Genauigkeit der Kraft-Fernübertragung ist in die erfindungsgemäße Einrichtung zur Drehwinkel- und Kraft-Fernübertragung eine Einheit 23 (Fig.2) zur Vorgabe der Orientierung der Ständermagnetfelder der Führungs- und der Stellsynchronmaschine eingefügt. Ein der Orientierung der Ständermagnetfelder der Synchronmaschinen 1,2 entsprechender Kode gelangt vom Ausgang der zur Vorgabe der Orientierung dienenden Einheit 23 zu den Adreßeingängen des Festwertspeichers 31 (Fig.3), in dem Kodes der Dauern und der Polarität der Stromversorgungsimpulse für drei Wicklungen der Synchronmaschinen 1,2 abgelegt sind. Diese Kodes stellen eine Orientierung der
Ständermagnetfelder der Synchronmaschinen 1,2 für die Einrichtung, deren Funktionsschaltbild in Fig.1 dargestellt
ist, perpendikulär zur Richtung von $\overline{\Phi}_{rz}$ und für die
Einrichtung, deren Funktionsschaltbild in Fig.2,3 gezeigt ist, nach einer Richtung sicher, die durch den Kode vom Ausgang der Einheit 23 zur Vorgabe der Orientierung der Magnetfelder vorgegeben wird. Die den Dauern der
Stromversorgungsimpulse entsprechenden Kodes werden aus
dem Festwertspeicher 31 in die Rückwärtszähler 34 über
die Steuereingänge 32 der Kode-Impulsdauer-Umsetzer 33
( in der Zeichnung ist nur ein Zähler 34 gezeigt) eingetragen. Die Frequenz, mit der diese Kodes eingetragen
werden, ist konstant, wobei die Eintragung derselben
mit den Impulsen vom Ausgang des zur Teilung der Frequenz
des Steuergenerators 52 dienenden Frequenzteilers 53
erfolgt , welche an den Schreibeingängen 54 der Umsetzer 33 eintreffen. Nach dem Einschreiben von Kodes,
die von Null verschieden sind, erscheinen an den invertierenden Borgenausgängen der Rückwärtszähler 34 logische Einsen, die den Anfang der Stromversorgungsimpulse
der Ständerwicklungen der Synchronmaschinen 1,2 vorbestimmen. Hierbei erscheinen die logischen Einsen auch
an den Eingängen 37 der logischen UND-Glieder 35, wodurch
der Durchgang der Impulse vom Borgenausgang des Rückwärtszählers 49 über die logischen UND-Glieder 35 zu den
Subtraktionseingängen 36 der Zähler 34 freigegeben wird.
Die Folgeperiode der Impulse ist gleich einer Folgeperiode der Impulse des Steuergenerators 52, die mit einem
dem Absolutbetrag des Steuersignals entsprechenden Kode
multipliziert ist, der vom Ausgang der Schaltung 47 zur
Ermittlung des Moduls des Steuersignals am Setzeingang 48
des Rückwärtszählers 49 ankommt, und somit ist diesem Kode auch die Dauer der Impulse an den Borgausgängen der
Rückwärtszähler 34 proportional. Die Impulse an den genannten Borgenausgängen enden, wenn die Zahlen in den Rückwärtszählern 34 gleich Null sind, wobei an den Borgenausgängen ein logisches 0-Signal auftritt, das das Ankommen der Impulse vom Borgenausgang des Rückwärtszählers 49 an den Subtraktionseingängen 36 der Rückwärtszähler 34 über die logischen UND-Glieder 35 sperrt.

Je nach dem Kode der Polarität, welcher von den Ausgängen des Festwertspeichers 31 an den zur Vorgabe der Impulspolarität vorgesehenen Eingängen 43 der Umschalter 39 ankommt, werden die Wicklungen mit Hilfe der Schalter 44 oder 45, die von den logischen UND-Gliedern 40 bzw. 44 gesteuert werden, an den einen oder den anderen Pol der Spannungsquelle 46 angeschlossen. Somit wird sichergestellt, daß die Effektivwerte der Spannung an den Ständerwicklungen der Synchronmaschinen 1,2 dem am Steuereingang 14 der Einheit 15 zur Erzeugung eines Stromes in den Wicklungen liegenden Kode proportional sind. Durch die Zusammenarbeit des Summators 55 und der Divisionseinheit 56 zur Teilung durch zwei wird die Bildung einer Adresse am Eingang des Festwertspeichers 31 so sichergestellt, daß die Winkel zwischen den Magnetfelder Läufer und Ständer der Führungs- und der Stellsynchronmaschine 1 bzw. 2 dem Absolutbetrag nach gleich groß sind, aber entgegengesetzte Vorzeichen haben.

Die Steuereinheit 17 des Speicherelementes arbeitet wie folgt. Bei der Fernübertragung von Drehwinkel und Kraft wird am Ausgang des Flipflops 29 das Signal einer logischen Eins, d.h. das erste Steuersignal aufrechterhalten. Infolgedessen, daß der Schalter 30 dabei offen ist, liegt am invertierenden C-Takteingang und am K-Rücksetzeingang des in der beschriebenen Ausführungsform der Einrichtung verwendeten JK-Flipflops 29 ein logisches 0-Signal an. In diesem Fall arbeitet das Speicherelement 12 im Betrieb eines Eingangssignalfolgers, d.h. das Signal an seinem Ausgang ist gleich dem an seinem Informationseingang 13 liegenden Signal. Müssen die Führungs- und die Stellwelle 5 bzw. 6 fixiert werden, so wird dem Steuereingang 22 der Steuereinheit 17 des Speicherelementes ein Signal, z.B. vom Operateur zugeschickt, durch das der Schalter 30 geschlossen wird, so daß am invertierenden Takteingang C und am Rücksetzeingang K ein logisches 1-Signal erscheint, was zum Umkippen des Flipflops 29 in einen Zustand führt, bei dem an dessen Ausgang ein logisches 0-Signal gebildet wird. Hierbei soll das betrachtete Umschalten bei einem beliebigen Signal am J-Eingang dank den Besonderheiten der Wirkungsweise des JK-Flipflops geschehen (beim Anliegen von zwei logischen 1-Signalen an den Eingängen kehrt es seinen vorhergehenden Zustand um). Erscheint aber ein logisches 1-Signal am C-Eingang, so wird dadurch das weitere Umschalten des Flipflops 29 für die ganze Schließungszeit des Schalters 30 gesperrt. Dabei wird das Speicherelement 12 mit dem Erscheinen des zweiten Steuersignals, nämlich des logischen 0-Signals, an seinem Steuereingang 18 die Speicherung einer Information über den Drehwinkel der Führungswelle 5 im Augenblick der Schließung des Schalters 30 vornehmen. Sobald an den Steuereingang 22 der Steuereinheit 17 des Speicherelementes ein Signal angelegt wird, das den Schalter 30 trennt, erscheint am Rücksetzeingang K und am invertierenden Takteingang C des Flipflops ein logisches 0-Signal, was keine Änderung des Zustandes des Flipflops 29 bei Ausbleiben des logischen 1-Signals am Ausgang des logischen NAND-Gliedes 28 bewirkt, aber die Umkippungen dieses Flipflops freigeben wird. Sobald an mindestens einem der Eingänge des logischen NAND-Gliedes 28 das logische 0-Signal anliegt, tritt am Ausgang dieses NAND-Gliedes 28 ein logisches 1-Signal auf, was zum Umkippen des Flipflops 29 und zum Erscheinen eines logischen 1-Signals am Steuereingang 18 des Speicherelementes 12 führt, auf welches das letztere in den Betrieb der Wiederholung des Eingangssignals übergeht. Das logische 0-Signal erscheint an einem der Eingänge des NAND-Gliedes 28 in einem von zwei Fällen, und zwar bei Gleichheit der Ausgangssignale $\alpha_0$ des Speicherelementes 12 und eines an dessen Informationseingang 13 liegenden Signals $\alpha_z$ oder

bei Gleichheit des Signals $\alpha_z$ und des Ausgangssignals $\alpha_i$ des Positionsgebers 10. Im ersten Fall wird die Einrichtung stufenlos ohne Ruck in Gang gesetzt, weil der Operateur zur Gewährleistung der Gleichheit von $\alpha_o$ und $\alpha_z$ ein Moment entwickeln muß, das im Augenblick der Fixierung angelegt wurde. In dem zweiten Fall, wo nach der Fixierung die Welle 4 der Stellsynchronmaschine 2 in umgekehrter Richtung zu drehen ist, erfolgt das Umkippen des Flipflops 29 bei Gleichheit von $\alpha_z$ und $\alpha_i$, aber das Ingangsetzen der Einrichtung wird nicht stufenlos sein. Das Vorhandensein der Steuereinheit 17 sichert einen Übergang der Einrichtung zum Betrieb der Fernübertragung von Drehwinkel und Kraft bei beliebiger Drehrichtung, was die Zuverlässigkeit des Master-Slave-Manipulators erhöht. In der zu beschreibenden Ausführungsform der Einrichtung nimmt das logische NAND-Glied 28 als logisches O-Signal ein Signal, dessen Wert bei Null nahe ist, durch Anschluß der Ausgänge der Vergleichsglieder 24,25 an seine Eingänge wahr.

Nachstehend wird die Wirkungsweise der in Fig.1 dargestellten Einrichtung zur Drehwinkel- und Kraft-Fernübertragung zwischen einer Führungs- und einer Stellwelle mit Hilfe von in Fig.4 gezeigten Zeigerdiagrammen bei gleichsinniger Schaltung der Ständerwicklungen der Synchronmaschinen 1 (Fig.1),2 beschrieben.

Es sei angenommen, daß die Orientierung der Magnetfelder der Läufer und Ständer der Sycnhronmaschinen 1,2 im Anfangszeitpunkt durch ausgezogene Linien in Fig.4a dargestellt ist. Der Positionsgeber 9 gibt ein Signal ab, das die Orientierung des Magnetfeldes $\overline{\Phi}_{sz}$, d.h. $\alpha_s$ festlegt. Dabei kann man für die Drehmomente $M_1$, $M_2$ der Führungs- und der Stellsynchronmaschine 1 bzw.2 nach (1) folgende Beziehungen

$$\begin{cases} M_1 = K_1' \Phi_{rz} \left( \alpha_s - \alpha_i \right) \\ M_2 = K_2' \Phi_{ri} \sin \left( \alpha_s - \alpha_i \right) \left| \alpha_s - \alpha_i \right| \end{cases} \quad (2)$$

schreiben, worin $K_1'$, $K_2'$ durch $K_1$ bzw. $K_2$ aus (1) be-

stimmt und zusätzlich ein Zusammenhang von $\overline{\phi}_{sz}$ bzw. $\overline{\phi}_{si}$ mit der Abweichung ($\alpha_s - \alpha_i$) berücksichtigt werden :

$$K_1' = \frac{\phi_{sz}\, K_1}{|\alpha_s - \alpha_i|} \quad , \quad K_2' = \frac{\phi_{si}\, K_2}{|\alpha_s - \alpha_1|} \qquad (3)$$

Wird das Belastungsmoment $M_i$ vergrößert, so führt dies zu einer Zunahme der Größe ($\alpha_s - \alpha_i$) und damit nach (2),(3) zu einer Vergrößerung von $\overline{\phi}_{sz}$, $\overline{\phi}_{si}$ und $M_1$, $M_2$. Nach der Beendigung eines Übergangsprozesses werden neue Werte der Ständermagnetfelder $\overline{\phi}'_{sz}$, $\overline{\phi}'_{si}$ der Führungs- und Stellsynchronmaschine 1 bzw.2 und eine neue Orientierung des Magnetfeldes $\overline{\phi}'_{ri}$ der Stellsynchronmaschine 2, die in Fig.4a gestrichelt angedeutet sind, eingestellt.

Muß aber der Operateur die Orientierung der Führungs- und der Stellwelle 5 bzw.6 verändern, z.B. diese Wellen entgegen dem Urzeigersinn um einen gewissen Winkel $\Delta\alpha$ drehen, so dreht er um den angegebenen Winkel $\Delta\alpha$ die Führungswelle 5. Dabei drehen sich um den gleichen Winkel auch $\overline{\phi}_{sz}$, $\overline{\phi}_{si}$ und erhöht sich damit laut (1), (2) $M_2$, was bei gleichbleibendem Wert des Belastungsmomentes $M_i$ zu einer Drehung der Stellwelle 6 zusammen mit $\overline{\phi}_{ri}$ um den Winkel $\Delta\alpha$ führt. Für diesen Fall ist die Orientierung der Magnetfelder der Führungs- und der Stellsynchronmaschine 1 bzw. 2 in Fig.4b durch ausgezogene Linien dargestellt.

Wenn das Belastungsmoment $M_i$ einen geringen Wert hat, nehmen die Zeigerdiagramme der Magnetfelder eine Form an, die in Fig.4c durch ausgezogene Linien angedeutet ist. Bei einer Änderung der Wirkungsrichtung von $M_i$ wird der der Größe ($\alpha_s - \alpha_i$) gleiche Winkel ($\overline{\phi}_{si}$, $\overline{\phi}_{ri}$) durch Summierung von $M_2$ und $M_i$ auf Null vermindert und das Vorzeichen der Größe ($\alpha_s - \alpha_i$) kehrt sich um. Folglich kehrt sich die Orientierung von $\overline{\phi}_{sz}$, $\overline{\phi}_{si}$ um ($\overline{\phi}'_{sz}$, $\overline{\phi}'_{si}$ sind in Fig.4c gestrichelt angedeutet). Daher werden in den den ursprünglichen Rich-

tungen entgegengesetzten Richtungen $M_1, M_2$ wirken, was zu einer Bremsung der Stellwelle 6 führt und dazu beiträgt, daß der Operateur die Wirkungsrichtungen von $M_i$ richtig empfindet. Dabei wird nach dem Abschluß des Übergangsprozesses eine Orientierung der Magnetfelder der Läufer und Ständer eingestellt, welche in Fig.4c gestrichelt dargestellt ist.

Sobald am Steuereingang 22 der Steuereinheit 17 des Speicherelementes ein Signal angelegt wird, durch das der Schalter 30 (Fig.3) geschlossen wird, erscheint am Steuereingang 18 des Speicherelementes 12 infolge der früher beschriebenen Umschaltungen ein zweites Signal ( logisches 0-Signal), und die Orientierung von $\overline{\Phi}_{sz}$, $\overline{\Phi}_{si}$ bleibt unverändert. Ist dabei das vom Operateur zu entwickelnde Moment $M_z$ gleich Null, dann wird – wie aus (1), (2) zu ersehen ist– das $\overline{\Phi}_{rz}$ in der gleichen Richtung wie das $\overline{\Phi}_{sz}$ orientiert und der Winkel zwischen $\overline{\Phi}_{si}$ und $\overline{\Phi}_{ri}$ nicht geändert, wie es aus Fig.4d ersichtlich ist. Bei der Notwendigkeit, die Fixierung einer Lage zu beendigen, und beim Trennen des Schalters 30 beginnt der Operateur die Führungswelle 5 in einer Richtung zu drehen, in der sie vor der Fixierung bewegt wurde ( die Orientierung der Magnetfelder zu einem gewissen Zeitpunkt bei einer solchen Bewegung ist in Fig.4e durch ausgezogene Linien dargestellt). Sobald das $\overline{\Phi}'_{rz}$ die vorige Orientierung ( diese ist in Fig.4e gestrichelt angedeutet) erreicht hat, d.h. bei Gleichheit von $\alpha_o$ und $\alpha_z$ ( der Ausgang des Vergleichselementes 24 führt 0-Signal ), erscheint wieder das erste Steuersignal, nämlich das logische 1-Signal, das den Übergang des Speicherelementes 12 zum Betrieb der Wiederholung des Signals bewirkt, das am Informationseingang 13 eintrifft. Somit wird die Einrichtung stufenlos zu Funktion gebracht, da der Operateur an die Führungswelle 5 ein Moment $M_z$ anlegt, dessen Wert dem Augenblick der Schließung des Schalters 30 entspricht.

Muß man aber nach der Fixierung eine Bewegung in entgegengesetzter Richtung durchführen, so nimmt die Orientierung der Magnetfelder der Synchronmaschinen 1,2 für einen gewissen Zeitpunkt eine Form an, die in Fig.4f durch ausgezogene Linien dargestellt ist. Die Einrichtung wird in Gang gesetzt, sobald das Magnetfeld $\overline{\Phi}'_{rz}$ des Läufers der Führungssynchronmaschine 1 die in Fig.4f gestrichelt angedeutete Orientierung erreicht hat, d.h. bei Gleichheit von $\alpha_z$ und $\alpha_i$ .

In Fig.5 (a,b,c,d) sind Zeigerdiagramme gezeigt, die die Wirkungsweise der Einrichtung nach Fig.2 veranschaulichen. Hierbei entspricht die Fig.5a der einen Wirkungsrichtung von $M_i$ und die Fig.5b der entgegengesetzten Wirkungsrichtung von $M_i$, während die Fig.5c,d Vorgänge veranschaulichen, die beim Übergang der Einrichtung zum Betrieb der Fixierung eines Drehwinkels der Wellen 5,6 und zum Betrieb der Drehwinkel- und Kraft-Fernübertragung ablaufen.

Angenommen, daß die Orientierung der Magnetfelder der Führungs- und der Stellsynchronmaschine 1,2 zum Anfangszeitpunkt eine Form hat, die in Fig.5a durch ausgezogene Linien dargestellt ist. Dank der Arbeit der Einheit 23 (Fig.2) zur Vorgabe der Orientierung der Ständermagnetfelder $\overline{\Phi}_{rz}$, $\overline{\Phi}_{ri}$ bildet man dabei jeweils mit $\Phi_{sz}$, $\Phi_{si}$ Winkel, die gleich groß, aber von entgegengesetzter Richtung sind. Für Drehmomente $M_1, M_2$ der Führungs- und der Stellsynchronmaschine 1 bzw.2 kann man folgende Ausdrücke

$$\begin{cases} M_1 = K'_1 \left| \alpha_z - \alpha_i \right| \cdot \sin \dfrac{\alpha_z - \alpha_i}{2} , \\[2mm] M_2 = K'_2 \left| \alpha_z - \alpha_i \right| \cdot \sin \dfrac{\alpha_i - \alpha_z}{2} \end{cases} \qquad (4)$$

schreiben.

Aus (4) ist zu erkennen, daß das Verhältnis von $M_1$ zu $M_2$ zum Unterschied von (2) konstant ist, d.h. bei dem Vorhandensein der Einheit 23 zur Vorgabe der Orientierung der Ständermagnetfelder wird die Genauigkeit der Fernübertragung von Kräften erhöht.

Dreht man die Führungswelle 5 um einen gewissen Winkel $\Delta\alpha$, so drehen sich um den Winkel $\Delta\alpha/2$ in derselben Richtung $\overline{\Phi}_{sz}$, $\overline{\Phi}_{si}$, was nach (4) zu einer Zunahme von

$M_1$ und $M_2$ führt. Da sich $M_i$ nicht ändert, bewirkt die Zunahme von $M_2$ ein Umlaufen der Stellwelle 6 in der Wirkungsrichtung von $M_2$ und damit eine Drehung von $\overline{\Phi}_{sz}$, $\overline{\Phi}_{si}$ sowie eine Verminderung von $(\alpha_z - \alpha_i)$. Nach dem Abschluß des besprochenen Übergangsprozesses wird eine neue Gleichgewichtslage eingestellt, für welche die Orientierung der Magnetfelder in Fig.5a gestrichelt gezeigt ist.

Die Orientierung der Magnetfelder der Läufer und Ständer der Führungs- und der Stellsynchronmaschine 1 bzw.2 bei entgegengesetzten Richtungen von $M_z$ und $M_i$ ist in Fig.5b ausgezogen angedeutet. Bei gleichzeitiger Vergrößerung von $M_z$ und $M_i$ wird der Absolutbetrag $|\alpha_z - \alpha_i|$ nach (4) erhöht, und nach dem Abschluß des Übergangsprozesses wird ein neuer Gleichgewichtszustand eingestellt, bei dem die Magnetfelder so orientiert sind, wie es in Fig.5b gestrichelt dargestellt ist.

Beim Schließen des Schalters 30 (Fig.3) wird die Orientierung von $\Phi_{sz}$, $\Phi_{si}$ fixiert, und wenn $M_z$ gleich Null ist, dreht sich $\Phi_{rz}$ unter der Wirkung von $M_1$ bis zum Zusammenfallen mit $\Phi_{sz}$, wie dies in Fig.5c durch ausgezogene Linien dargestellt ist. Nach der Beendigung der Fixierung, wenn die unterbrochene Bewegung fortzusetzen ist, wird die Einrichtung in den Betrieb der Drehwinkel- und Kraft-Fernübertragung nach der Rückkehr des $\Phi_{rz}$ in die Lage $\alpha_0$ gesetzt, dessen Orientierung in Fig.5c gestrichelt angedeutet ist (wobei $\alpha_0 = \alpha_z'$ ist).

Muß man aber nach der Fixierung mit einer Bewegung von der Lage der ursprünglichen Orientierung aus in entgegengesetzter Richtung beginnen, welche in Fig.5 d durch ausgezogene Linien angedeutet ist, so geschieht das Einschalten der Einrichtung in den Betrieb der Drehwinkel- und Kraft-Fernübertragung durch die Arbeit des Vergleichsgliedes 25 im Augenblick der Übereinstimmung der Orientierung von $\overline{\Phi}_{rz}'$ ( in Fig.5d gestrichelt gezeigt) mit der Orientierung von $\overline{\Phi}_{ri}$. Im weiteren arbeitet die Einrichtung analog dem obenbeschriebenen, d.h. es erfolgt die Fernübertragung von Drehwinkel und Kraft zwischen der Führungs- und der Stellwelle 5 bzw.6.

Somit werden durch die Gewährleistung der Fixierung der Lage der Führungs- und der Stellwelle für eine vorgegebene Zeit in dem gesamten Änderungsbereich des Belastungsmomentes die Ermüdbarkeit des Operateurs verringert und durch die Möglichkeit einer Erholung des Operateurs bei der Fixierung komfortablere Arbeitsbedingungen geschaffen. Dadurch, daß die erfindungsgemäße Einrichtung in Gang stufenlos gesetzt werden kann, wird ein störungsfreier Betrieb des Manipulators gesichert. Letzten Endes trägt dies zur Erweiterung des Einsatzgebietes des Master-Slave-Manipulators und zur Erhöhung der Qualität der auszuführenden Operationen bei.

Gewerbliche Anwendbarkeit

Die vorliegende Erfindung kann erfolgreich in der Robotertechnik, insbesondere in Master-Slave-Manipulatoren angewendet werden.

PATENTANSPRÜCHE

1. Einrichtung zur Drehwinkel- und Kraft-Fernübertragung zwischen einer Führungs-und einer Stellwelle, welche eine Führungs- und eine Stellsynchronmaschine (1 bzw.2) enthält, deren Wellen (3,4) jeweils mit der Führungs-und Stellwelle (5 bzw.6) und Positionsgebern (9,10) kinematisch gekoppelt sind, von denen der eine, mit der Welle (4) der Stellsynchronmaschine (2) verbundene Positionsgeber ausgangsseitig an den ersten Eingang einer Einheit (11) zur Sollwertvorgabe der Amplitude der Ständermagnetfelder der Führungs-und der Stellsynchronmaschine angeschlossen ist, deren zweiter Eingang mit dem Positionsgeber (9) elktrisch verbunden ist, der mit der Welle (3) der Führungssynchronmaschine (1) gekoppelt ist, wobei der Ausgang der Einheit (11) am Steuereingang (14) einer Einheit (15) zur Erzeugung eines Stromes in den Wicklungen der Führungs- und der Stellsynchronmaschine liegt, deren Sollwertvorgabeeingang (16) mit dem Ausgang mindestens eines der Positionsgeber (9,10) elektrisch gekoppelt ist und deren Ausgänge an die miteinander elektrisch gekoppelten entsprechenden Wicklungen der Führungs- und der Stellsynchronmaschine (1 bzw.2) angeschlossen sind, d a d u r c h   g e k e n n z e i c h n e t , daß sie ein Speicherelement (12), dessen Informationseingang (13) am Ausgang des Positionsgebers (9) liegt, der mit der Welle (3) der Führungssynchronmaschine (1) verbunden ist, und dessen Ausgang an den zweiten Eingang der Einheit (11) zur Sollwertvorgabe der Amplitude der Ständermagnetfelder angeschlossen ist, und eine Steuereinheit (17) für das Speicherelement enthält, deren Ausgang an den Steuereingang (18) des Speicherelementes (12), deren erster und zweiter Informationseingang (19 bzw.20) an den Informationseingang (13) des Speicherelementes (12) bzw. an den Ausgang des letzteren angeschlossen sind, wobei der dritte Informationseingang (21) der Steuereinheit (17) mit dem Ausgang des mit der Welle (4) der Stellsynchronmaschine (2) gekoppelten Positionsgebers (10) verbunden ist und an den Steuereingang (22) der Steuereinheit (17) äußere Signale jeweils bei einer Fixierung der Wellen (3,4 ) der Führungs - und der Stellsynchronmaschine (1 bzw.2) und bei der Beendigung der Fixierung angelegt werden, mit welchen äußeren Signalen die Steuereinheit (17) ein Steuersignal, durch das die Speicherung eines Drehwinkels der Welle (3) der Führungssynchronmaschine (1) im Augenblick der Fixierung bewirkt wird, und ein anderes Steuersignal bei Gleichheit des laufenden Drehwinkelwertes der Welle (3) der Führungssynchronmaschine(1) und eines im Speicherelement (12) gespeicherten Wertes oder eines laufenden Drehwinkelwertes der Welle (4) der Stellsynchronmaschine (2) liefert, wobei mit diesem anderen Steuersignal die Übertragung des laufenden Drehwinkelwertes der Welle (3) der Führungssynchronmaschine (1) vom Speicherelement (12) erfolgt.

2. Einrichtung nach Anspruch 1, d a d u r c h g e k e n n z e i c h n e t , daß sie eine Einheit (23) zur Vorgabe der Orientierung der Ständermagnetfelder der Führungs-und der Stellsynchronmaschine aufweist, deren Eingänge an den Ausgang des mit der Welle (4) der Stellsynchronmaschine (2) gekoppelten Positionsgebers (10) und den Ausgang des Speicherelementes (12) angeschlossen sind und deren Ausgang mit dem Sollwertvorgabeeingang (16) der Einheit (15) zur Erzeugung eines Stromes in den Wicklungen der Führungs-und der Stellsynchronmaschine in Verbindung steht.

3. Einrichtung nach Ansprüchen 1 oder 2, d a d u r c h g e k e n n z e i c h n e t ,daß die Steuereinheit (17) des Speicherelementes ein erstes und ein zweites Vergleichsglied (24 bzw.25), deren eine Eingänge vereinigt sind, ein logisches NAND-Glied (28), dessen einer Eingang (26) an den Ausgang des ersten Vergleichsgliedes (24) und dessen anderer Eingang (27) an den Ausgang des zweiten Vergleichsgliedes (25) geschaltet ist, ein Flipflop (29), dessen Setzeingang an den Ausgang des logischen NAND-Glie- des (28) angeschlossen ist, und einen Schalter (30) enthält, dessen einer Anschluß an den Rücksetz- und den Takteingang des Flipflops (29) geschaltet ist und an dessen anderen Anschluß ein Signal für die Steuerung des Flipflops (29) angelegt wird, wobei die zusammengeschalteten Eingänge des ersten und des zweiten Vergleichsgliedes (24 bzw.25) als erster Informationseingang (19) der Steuereinheit (17) des Speicherelementes , die anderen Eingänge des ersten und des zweiten Vergleichsgliedes (24 bzw.25) als erster bzw. zweiter Informationseingang (20 bzw.21) dienen, während der Steuereingang des Schalters (30)dient und der Ausgang des Flipflops (29) den Ausgang der Steuereinheit (17) des Speicherelementes bildet.

FIG.1

FIG.2

FIG.3

FIG.4

FIG.5

# INTERNATIONAL SEARCH REPORT

International Application No PCT/SU 88/00014

## I. CLASSIFICATION OF SUBJECT MATTER (if several classification symbols apply, indicate all) [6]

According to International Patent Classification (IPC) or to both National Classification and IPC

$IPC^4$: G 08 C 19/38, H 02 K 29/06

## II. FIELDS SEARCHED

| Minimum Documentation Searched [7] | |
|---|---|
| Classification System | Classification Symbols |
| $IPC^4$: | B 25 J 13/00, B 63 H 21/00, G 08 C 19/38, H 02 K 29/06 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | US, A, 4302138, (Alain Zarudiansky), 24 November 1981, see the abstract | 1 |
| A | DE, B2, 1616025, (N.V. Nieuwe Rotterdamsche Instrumentenfabriek Observator), 10 February 1977, see column 3 lines 39-68, column 4 lines 1-57, fig. 1 | 1-3 |
| A | DE, B2, 1506380, (Jungner, Instrument AB), 1 February 1973, see column 2 lines 49-68, column 3 lines 1-53, figure 2 | |
| A | FR, A1, 2420177, (THE SINGER COMPANY), 12 October 1979, see figure 1 | 1-3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 15 July 1988 (15.07.88) | 5 October 1988 (05.10.88) |
| International Searching Authority | Signature of Authorized Officer |
| ISA/SU | |

Form PCT/ISA/210 (second sheet) (January 1985)